Europäisches Patentamt

European Patent Office

Office européen des brevets

(11) Numéro de publication: **0 143 065**
**A1**

(12) # DEMANDE DE BREVET EUROPEEN

(21) Numéro de dépôt: **84420196.2**

(22) Date de dépôt: **22.11.84**

(51) Int. Cl.⁴: **B 60 R 9/10**

(30) Priorité: **24.11.83 FR 8318971**

(43) Date de publication de la demande:
**29.05.85 Bulletin 85/22**

(84) Etats contractants désignés:
**AT BE CH DE GB IT LI LU NL SE**

(71) Demandeur: **Salmon, Jean-Claude**
**Pouru-Saint-Rémy**
**F-08140 Douzy(FR)**

(72) Inventeur: **Salmon, Jean-Claude**
**Pouru-Saint-Rémy**
**F-08140 Douzy(FR)**

(74) Mandataire: **Séraphin, Léon**
**PECHINEY 28, rue de Bonnel**
**F-69433 Lyon Cedex 3(FR)**

(54) **Porte-velo.**

(57) L'invention est relative à un porte-vélo universel.

Selon l'invention, le porte-vélo est destiné à être posé sur les pavillons, coffres ou hayons de véhicules.

Il comporte un support rigide (5) muni de supports arrières réglables (6) permettant un appui de cadre au niveau du tube direction-pédalier. Il comporte d'autre part un mécanisme de blocage de la fourche (7).

L'appui sera réalisé sur le véhicule par ventouses caoutchouc (14), la fixation sur le véhicule étant assurée par sangles nylon (15) à blocages rapides.

Le support des roues du vélo est assuré par un mécanisme réglable (19) assurant une préhension de la roue en porte-à-faux. Ces supports de roue (19) comportent également un mécanisme de contrôle du voilage des roues.

EP 0 143 065 A1

./...

FIG.8

## PORTE-VELO

L'invention est relative à un porte-vélo. Elle trouve notamment son application dans le transport de vélos, skis, ou bagages sur un véhicule automobile.

Actuellement le transport des bicyclettes sur une voiture est réalisé en fixant une galerie sur le pavillon des véhicules et en adaptant sur cette galerie un porte-vélo composé d'éléments sur lesquels se fixe la bicyclette.

Malheureusement, les porte-vélos actuels souffrent de nombreux inconvénients. Ils peuvent tout d'abord occasionner des dégâts aux gouttières du véhicule lorsque la charge devient trop importante ou par défaut de serrage de l'ensemble.

Par ailleurs, du fait que les vélos sont disposés sur le toit du véhicule, d'une part la hauteur totale est importante, et donc les risques d'accrochage sur les obstacles peu élevés sont importants (branches basses d'arbres sur parking, passage d'auvent sur portail, entrée de garage...), d'autre part, les vélos offrent au vent une prise importante.

Sur le plan pratique, en raison de la position élevée du vélo, sa mise en place sur le porte-vélo est malaisée d'où risque de détérioration des peintures (griffes, chocs). Ensuite, du fait que le vélo est parfois fixé par la selle et le guidon, les risques de torsions du cadre, du tube de selle et de la potence sont élevés. Des cas de rupture de telles pièces due à un travail du métal en fatigue ont déjà été constatés.

De par la diversité des formes de coffres, hayons ou pavillons, des réglages fastidieux s'imposent avant la mise en place du porte-bicyclette.

Le but principal de la présente invention est de présenter un porte-vélo universel destiné à être placé sur le coffre ou le hayon du véhicule. Cette position abaissée est favorable à l'aérodynamisme du véhicule puisque les vélos sont protégés du vent et ne font pas obstacle à la pénétration du véhicule dans l'air. Cette meilleure position favorise notamment les économies de carburant. De plus, le véhicule fait écran et les vélos sont protégés des salissures que l'on était habitué à rencontrer lors du transport des vélos sur le pavillon des véhicules.

Il sera cependant toujours possible de se rabattre sur la fixation en pavillon en cas d'impossibilité d'adaptation sur coffre ou hayon. Cette solution apparaît cependant moins intéressante comme explicité plus haut.

Un autre but de la présente invention est de présenter un porte-vélos sur lequel les vélos sont placés dans leur position de fonctionnement rentrée, évitant ainsi toute déformation des éléments constitutifs de la bicyclette.

De plus, le porte-vélo s'adapte instantanément au véhicule sans réglages fastidieux. Les moyens de fixation utilisés ayant d'autre part été étudiés pour éviter toute détérioration à la carrosserie de la voiture.

Le porte-vélo de l'invention pourra d'autre part assurer le transport de bagages ou de skis. Il peut donc remplir plusieurs fonctions. De plus, étant fixé de l'intérieur du véhicule, il ne peut être dérobé.

D'autres buts et avantages de la présente invention apparaîtront au cours de la description qui va suivre. Cette description n'est d'ailleurs donnée qu'à titre indicatif et n'a pas pour but de la limiter. Le porte-vélo destiné à être monté sur le coffre ou le hayon d'un véhicule pour le transport d'un ou plusieurs vélos (roues avant et arrière démontées), est caractérisé par le fait qu'il présente à l'arrière un mécanisme réglable destiné à supporter le vélo par la barre du cadre allant du boîtier du pédalier au tube de direction. Cette disposition permet d'abaisser au maximum le vélo en position de fixation, la bicyclette étant d'autre part fixée au porte-vélo par les pattes de fourche avant. Les roues sont fixées sur des supports réglables s'adaptant sur le porte-vélo.

L'invention sera mieux comprise si l'on se réfère à la description ci-dessous ainsi qu'aux dessins annexés qui en sont partie intégrante.

La figure 1 représente l'arrière d'un véhicule à coffre saillant équipé du porte-vélo de l'invention sur lequel est installé un vélo.

La figure 2 schématise le mode de fixation du cadre du vélo sur le porte-vélo.

La figure 3 représente le mode de transport préférentiel envisagé pour les roues du vélo.

La figure 4 représente le mode préférentiel d'appui adopté pour le contact véhicule porte-vélo.

La figure 5 schématise le mode préférentiel de fixation adopté pour rendre le porte-vélo temporairement solidaire du véhicule automobile.

La figure 6 montre le porte-vélo équipé de porte-roue.

La figure 7 indique l'utilisation possible du support de roue comme contrôleur de voilage.

La figure 8 représente une vue en perspective de l'ensemble du porte-vélo et de son mode de fixation.

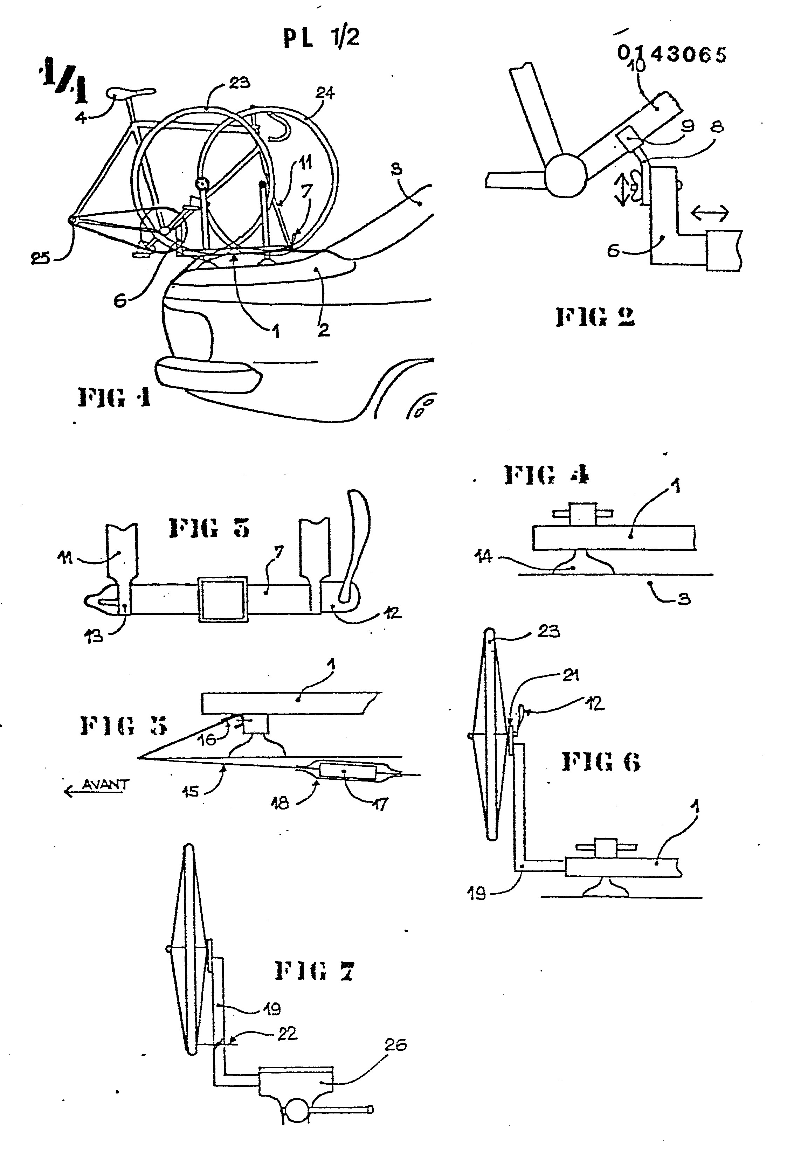

La figure 1 schématise le porte-vélo (1) monté sur le coffre arrière(2) d'une voiture (3).
Une bicyclette (4) est placée sur le porte-vélo dans les conditions idéales de transport. Le porte-vélo est essentiellement constitué d'un élément rigide équipé à l'arrière de supports réglables (6) et à l'avant de supports de fourches fixes (7).

La figure 1 illustre également le mode préférentiel de fixation du vélo (4) sur le porte-vélo (1). Les roues avant (23) et arrière (24) étant démontées, la chaîne sera reprise au niveau du pignon arrière par un dispositif spécial (25).

A la figure 2, on remarque que le support réglable longitudinalement(6) présente la particularité de se terminer par une fourche (8) garnie d'embouts caoutchouc (9) destinés à supporter le vélo (4) par son tube de cadre (10) allant du pédalier au boîtier de direction. La fourche (8) pouvant elle-même se régler verticalement.

L'immobilisation du vélo (4) à l'arrière du porte-vélo sera réalisée avantageusement à l'aide d'une courroie en cuir du type courroie de cale-pied, cette courroie passant par dessus le tube de cadre (10) en appui sur la fourche (8).
Le support (6) peut se régler longitudinalement pour s'adapter aux différentes dimensions des cadres de vélos à transporter.

La figure 3 précise la fixation de la fourche avant (11) du vélo par l'intermédiaire d'un ablocage qui exerce un serrage sur les pattes (13) de la fourche.

Figure 4, le contact du porte-vélo (1) sur le véhicule (3) se fera par l'intermédiaire de ventouses caoutchouc (14) qui ont pour but d'éviter toute détérioration des lunettes arrières ou carrosserie des véhicules.

Figure 5, la fixation du porte-vélo (1) sur le véhicule sera assurée par des sangles en nylon (15) munies à leurs extrémités, d'une part de crochets (16) se fixant sur le porte-vélo (1), et d'autre part d'un mécanisme de blocage (17) recouvert d'un cache moletonné (18) évitant tout choc ou bruit sur le véhicule. Le porte-vélo de l'invention a la particularité de présenter un moyen de fixation temporaire par sangles nylon (15) disposées parallèlement au sens de la marche du véhicule. Cette disposition évite tout glissement de la charge (porte-vélo et vélo) vers l'avant ou l'arrière comme c'est le cas pour les porte-vélos habituels.

Le transport des roues de la bicyclette sera assuré comme indiqué à la figure 1 et à la figure 6. Les supports réglables (19) coulissant dans le porte-vélo (1) maintiennent la roue (23) en porte-à-faux par l'intermédiaire d'une patte (21) comportant une boutonnière ouverte.

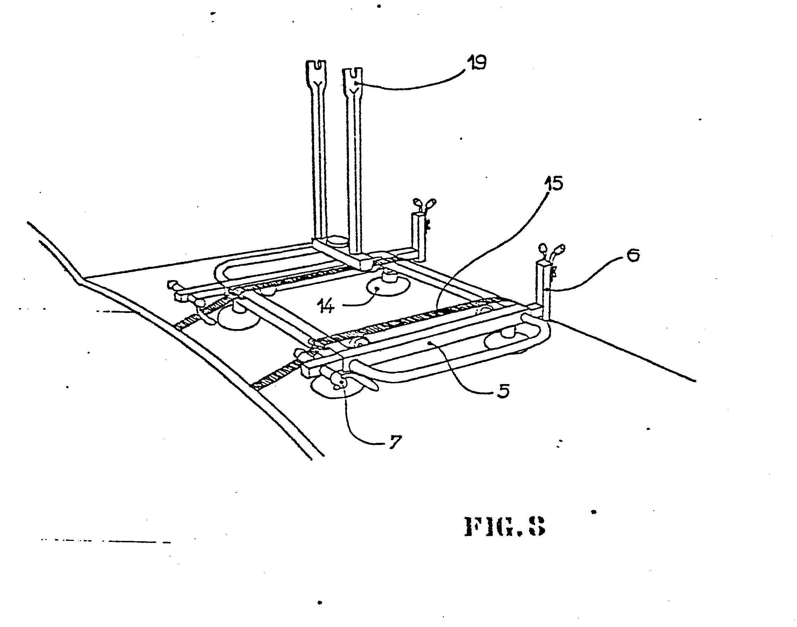

Figure 7, le support de roue (19) comporte un mécanisme de contrôle (22) du voilage des roues. On opérera le réglage après serrage à l'étau (26) ou directement sur le porte-vélo (1).

REVENDICATIONS

1. Porte-vélo destiné à être monté indifféremment et sans réglage préalable d'adaptation mécanique sur le pavillon, le hayon, le coffre d'un véhicule automobile, caractérisé par le fait qu'il est constitué d'un support rigide en tube carré comportant un support réglable (6) destiné à recevoir en appui le tube direction-pédalier.

2. Porte-vélo selon la revendication 1, caractérisé par le fait qu'il présente un support arrière réglable (6) longitudinalement terminé par un vé (8) garni d'embouts caoutchouc (9) permettant un appui idéal du tube direction-pédalier, ce vé (8) lui-même réglable verticalement.

3. Porte-vélo selon la revendication 1, caractérisé par le fait qu'il présente un support de fourche avant (7) permettant la fixation des pattes (13) de fourche (11) par l'intermédiaire d'un mécanisme de serrage (12).

4. Porte-vélo selon la revendication 1, caractérisé par le fait qu'il est en contact avec le véhicule (3) par des ventouses caoutchouc (14).

5. Porte-vélo selon la revendication 4, caractérisé par le fait qu'il est fixé sur le véhicule (3) par des sangles nylon munies de crochets (16) et de blocages rapides (17).

6. Porte-vélo selon la revendication 5 possèdant des sangles nylon (16) disposées dans le sens de marche du véhicule de façon à mieux absorber les forces d'inertie dues aux accélérations et freinages.

7. Porte-vélo selon la revendication 1, caractérisé par le fait qu'il comporte des supports de roues réglables (19) coulissant dans le porte-vélo (1).

8. Porte-vélo selon la revendication 7, caractérisé par le fait que ces supports réglables (19) se terminent par une patte (21) en forme de boutonnière ouverte permettant le support de la roue en porte-à-faux.

9. Porte-vélo selon la revendication 8, caractérisé par le fait qu'un des supports de roue réglable comporte un mécanisme de contrôle (22) du voilage des roues.

10. Porte-vélo selon la revendication 1, caractérisé par le fait qu'il peut permettre le transport de bagages.

PL 1/2

0143065

1/1

FIG 1

FIG 2

FIG 4

FIG 5

FIG 5

FIG 6

AVANT

FIG 7

FIG.8

Office européen
des brevets

**RAPPORT DE RECHERCHE EUROPEENNE**

0143065

Numéro de la demande

EP 84 42 0196

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 409 173 (PREALPINA)<br>* En entier * | 1-3,10 | B 60 R 9/10 |
| X | US-A-3 752 375 (WEIGL)<br>* En entier * | 1,4-6 | |
| P,X | FR-A-2 531 021 (SALMON)<br>* Revendications 1,2 * | 1 | |
| | ----- | | |

DOMAINES TECHNIQUES
RECHERCHES (Int. Cl.4)

B 60 R 9/00

Le présent rapport de recherche a été établi pour toutes les revendications

| Lieu de la recherche | Date d'achèvement de la recherche | Examinateur |
|---|---|---|
| LA HAYE | 28-02-1985 | SCHMITTER J.M. |